# EUROPEAN PATENT APPLICATION

(11) **EP 2 843 525 A1**
(43) Date of publication of application: **04.03.2015**
(21) Application number: 14182223.9
(22) Date of filing: 26.08.2014
(51) Int. Cl.: G06F 3/0481, G06F 3/0482

(54) **Electronic device and method for displaying application information**

(30) Priority: 29.08.2013 KR 20130103384
(71) Applicant: Samsung Electronics Co., Ltd, Gyeonggi-do 443-742 (KR)
(72) Inventor: Won, Sung-Joon, Gyeonggi-do (KR); Rhee, Ja-Mi, Gyeonggi-do (KR); Yang, Hui-Chul, Gyeonggi-do (KR); Jang, Chul-Ho, Seoul (KR); Jegal, Yun, Seoul (KR); Choi, Bong-Hak, Gyeonggi-do (KR)
(74) Representative: Nederlandsch Octrooibureau

(57) **Abstract**

An electronic device includes a processor is configured to cause a screen to display displaying contents of application in a first layer, determine whether a trigger occurs in the first layer, and cause the screen, when the trigger occurs, concurrently to display the contents of the application in the first layer and information of the entered application in the second layer. A method in an electronic device includes displaying contents of application in a first layer, determining whether a trigger occurs on the first layer, and when the trigger occurs, concurrently displaying the contents of the application in the first layer and information of the applications in a second layer.

## Description

### TECHNICAL FIELD OF THE DISCLOSURE

The present disclosure relates generally to an electronic device and a method for displaying application information.

### BACKGROUND OF THE DISCLOSURE

As various applications are developed, users can download and utilize a desired application. However, a conventional application does not feed application information back to the user.

For example, when executing a schedule application, an electronic device cannot notify details such as person, time, and place for appointment, relating to a recent schedule. As a result, the user needs to manually check the schedule.

Hence, when executing a particular application, the electronic device demands an apparatus and a method for feeding the application information back to the user.

### SUMMARY OF THE DISCLOSURE

To address the above-discussed deficiencies, it is a primary aspect of the present disclosure to provide an apparatus and a method for, when entering a particular application, enhancing user convenience by displaying application contents in a main layer and concurrently displaying information of the displayed application in a sub-layer.

An electronic device includes a processor is configured to cause a screen to display displaying contents of application in a first layer, determine whether a trigger occurs in the first layer, and cause the screen, when the trigger occurs, concurrently to display the contents of the application in the first layer and information of the entered application in the second layer.

In some embodiments, the trigger comprises a touch input.

In some embodiments, the contents of the application to be displayed in the first layer are sorted based on categories.

In some embodiments, summary information of the application is displayed in the first layer.

In some embodiments, the first layer is equal to or smaller than the second layer in size, is placed adjacent to the second layer, and contains the entered application contents.

In some embodiments, the second layer is equal to or greater than the first layer in size, is placed next below the first layer, and contains icons linked to contents to be displayed in the first layer based on the categories and summary information of the application.

In some embodiments, the processor is configured to divide a screen into a first area for displaying the first layer and a second area for displaying the second layer, display the first layer in the first area and the second layer in the second area, and concurrently display either the contents or icons linked to the contents in the first layer based on categories and summary information of the application in the second layer.

In some embodiments, the processor is configured to detect vertical or horizontal scrolling on the first layer, and expand or reduce the first layer region according to a direction and a distance of the detected scroll.

In some embodiments, the processor is configured to receive a selection of one of the contents in the first layer, expand the first layer to a maximum size, and display detailed information of the selected content.

In some embodiments, the processor is configured to receive a selection of one of summary information displayed in the second layer, and display detailed information of an application corresponding to selected one of summary information in the second layer.

In some embodiments, the processor is configured to detect vertical or horizontal scrolling on the second layer, and expand or reduce the second layer region according to a direction and a distance of the detected scroll.

In some embodiments, the processor is configured to select one of at least one icon displayed in the second layer, display the sorted at least one content in the first layer, and sort at least one content displayed in the first layer according to categories.

In some embodiments, the processor is configured to scroll the first layer vertically or horizontally to a maximum size, receive a selection of at least one icon displayed on the second layer, and execute an application linked to the selected icon.

A method in an electronic device includes displaying contents of application in a first layer, determining whether a trigger occurs on the first layer, and when the trigger occurs, concurrently displaying the contents of the application in the first layer and information of the applications in a second layer.

Other aspects, advantages, and salient features of the disclosure will become apparent to those skilled in the art from the following detailed description, which, taken in conjunction with the annexed drawings, discloses embodiments of the disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates an electronic device according to an embodiment of the present disclosure;
FIG. 2 illustrates hardware according to an embodiment of the present disclosure;
FIG. 3 illustrates a programming module according to an embodiment of the present disclosure;
FIGS. 4A and 4B illustrate a first layer and a second layer according to an embodiment of the present disclosure;
FIGS. 5A and 5B respectively illustrate a layer display differentiated based on entered application information in the electronic device according to an embodiment of the present disclosure;
FIGS. 6A, 6B, 6C and 6D illustrate icons selected for controlling to sort application contents based on a category in the second layer of the electronic device according to an embodiment of the present disclosure;
FIGS. 7A, 7B, 7C and 7D illustrate display region changes of the first layer and the second layer by scrolling the first layer in the electronic device according to an embodiment of the present disclosure;
FIGS. 8A, 8B, 8C and 8D illustrates display region changes of the first layer and the second layer by scrolling the second layer in the electronic device according to an embodiment of the present disclosure;
FIGS. 9A and 9B illustrate contents execution displayed in the first layer of the electronic device according to an embodiment of the present disclosure;
FIGS. 10A and 10B illustrate the detailed display of the application information of the second layer in the electronic device according to an embodiment of the present disclosure;
FIGS. 11A and 11B illustrate link of the entered application to another application in the electronic device according to an embodiment of the present disclosure;
FIGS. 12A, 12B and 12C illustrate another link of the entered application to another application in the electronic device according to an embodiment of the present disclosure;
FIG. 13 illustrates recommendation of second layer information by determining a current condition of the electronic device in the electronic device according to an embodiment of the present disclosure;
FIG. 14 illustrates example information displayed on the second layer of the electronic device according to an embodiment of the present disclosure;
FIGS. 15A and 15B illustrate yet another link of the entered application to another application in the electronic device according to an embodiment of the present disclosure;
FIG. 16 illustrates a method for displaying the application information in the electronic device according to an embodiment of the present disclosure; and
FIG. 17 illustrates a method for displaying the application information in the electronic device according to an embodiment of the present disclosure.

Throughout the drawings, like reference numerals will be understood to refer to like parts, components and structures.

### DETAILED DESCRIPTION

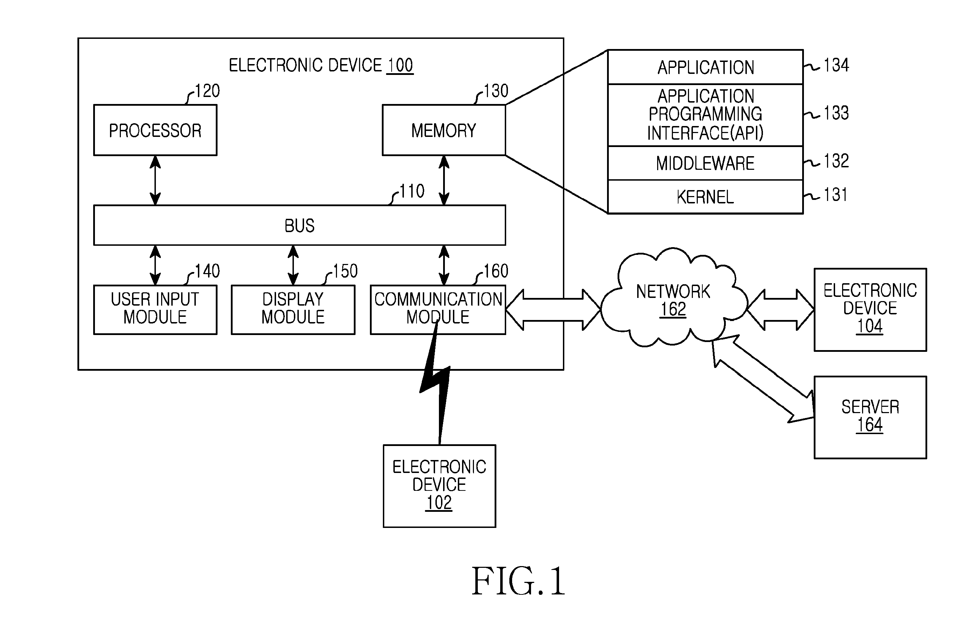

FIGURES 1 through 17, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic devices. The following description with reference to the accompanying drawings is provided to assist in a comprehensive understanding of embodiments of the disclosure as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of embodiments of the present disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

An electronic device according to an embodiment of the present disclosure can include a device having a communication function, for example, one or a combination of various devices such as smart home, tablet Personal Computer (PC), mobile phone, video phone, e-book reader, desktop PC, laptop PC, netbook computer, Personal Digital Assistant (PDA), Portable Multimedia Player (PMP), MP3 player, mobile medical device, electronic bracelet, electronic necklace, electronic accessory, camera, wearable device, electronic clock, wrist watch, smart white appliances (e.g., refrigerator, air conditioner, vacuum cleaner, artificial intelligence robot, television (TV), Digital Video Disk (DVD) player, audio system, oven, microwave oven, washer, air cleaner, digital frame), medical equipment (e.g., Magnetic Resonance Angiography (MRA), Magnetic Resonance Imaging (MRI), Computed Tomography (CT), X-ray machine, scanner), navigation device, Global Positioning System (GPS) receiver, Event Data Recorder (EDR), Flight Data Recorder (FDR), set-top box, TV box (e.g., Samsung HomeSync™, AppleTV™, or GoogleTV™), electronic dictionary, vehicle infotainment device, electronic equipment for ship (e.g., marine navigation system, gyrocompass), avionics, security device, electronic apparel, electronic key, camcorder, game console, Head-Mounted-Device (HMD), flat panel display device, electronic album, furniture or part of building/structure having the communication function, electronic board, electronic signature receiving device, or projector. It is apparent that the electronic device of the present disclosure is not limited to those devices.

FIG. 1 is a block diagram of an electronic device according to an embodiment of the present disclosure. Referring to FIG. 1, the electronic device 100 can include a bus 110, a processor 120, a memory 130, a user input module 140, a display module 150, and a communication module 160.

The bus 110 can be a circuit for interlinking the components and conveying communication (e.g., control messages) between the components.

The processor 120 can receive an instruction from the other components (e.g., the memory 130, the user input module 140, the display module 150, and the communication module 160) 100 via the bus 110, interpret the received instruction, and perform an operation or a data processing according to the interpreted instruction.

The memory 130 can store the instruction or the data received from or generated by the processor 120 or the other components (e.g., the user input module 140, the display module 150, and the communication module 160). The memory 130 can include programming modules including, for example, a kernel 131, middleware 132, an Application Programming Interface (API) 133, and an application 134. The programming module can be implemented using software, firmware, and hardware, or a combination of at least two of them.

The kernel 131 can control or manage system resources (e.g., the bus 110, the processor 120, or the memory 130) used to execute the operation or the function of the other programming modules, for example, the middle ware 132, the API 133, and the application 134. The kernel 131 can provide an interface allowing the middleware 132, the API 133, or the application 134 to access and control or manage the individual component of the electronic device 100.

The middleware 132 can relay data between the API 133 or the application 134 and the kernel 131. The middleware 132 can perform load balancing for a work request by giving priority of the system resource (e.g., the bus 110, the processor 120, or the memory 130) of the electronic device 100 to the work requests received from the applications 134, for example, to at least one of the applications 134.

The API 133, which is an interface for the application 134 to control the kernel 131 or the middleware 132, can include at least one interface or function for, for example, file control, window control, image processing, or text control.

The user input module 140 can receive and forward the instruction or the data from a user to the processor 120 or the memory 130 via the bus 110. The display module 150 can display an image, a video, or data to the user.

The communication module 160 can connect the communication between other electronic device 102 and the electronic device 100. The communication module 160 can support a short-range communication protocol (e.g., Wireless Fidelity (Wi-Fi), Bluetooth (BT), Near Field Communication (NFC)), or communication network 162 (e.g., Internet, Local Area Network (LAN), Wide Area Network (WAN), telecommunication network, cellular network, satellite network, or Plain Old Telephone Service (POTS)). The electronic devices 102 and 104 can be the same as or different from the electronic device 100.

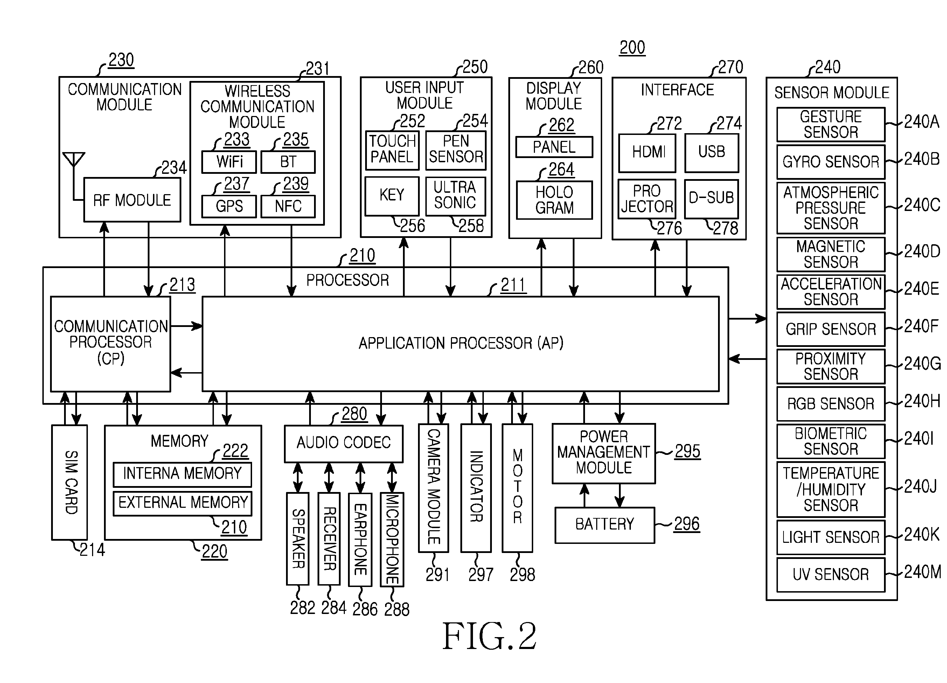

FIG. 2 is a block diagram of hardware 200 according to an embodiment of the present disclosure. The hardware 200 can be, for example, the electronic device 100 of FIG. 1. Referring to FIG. 2, the hardware 200 can include one or more processors 210, a Subscriber Identity Module (SIM) card 214, a memory 220, a communication module 230, a sensor module 240, a user input module 250, a display module 260, an interface 270, an audio codec 280, a camera module 291, a power management module 295, a battery 296, an indicator 297, and a motor 298.

The processor 210 (e.g., the processor 120) can include one or more Application Processor (APs) 211 and one or more Communication Processors (CPs) 213. The processor 210 can be the processor 120 of FIG. 1. While the AP 211 and the CP 213 are included in the processor 210 of FIG. 2, the AP 211 and the CP 213 can be included in different Integrated Circuit (IC) packages. The AP 211 and the CP 213 can be included in the single IC package. The processor 210 can enter one of at least one application and determine whether a trigger occurs in the one application. More specifically, the electronic device can determine whether touch is input from the user in the entered application, and determine whether a preset event occurs. For example, it is assumed that the electronic device enters a particular application and determines no summary information relating to a first application in a second layer. In this case, when detecting an action which scrolls a first layer above the second layer to a preset direction, the electronic device can display detailed information of data networks frequently used by the user in the first layer below the second layer, in the second layer.

The processor 210 can confirm the entrance to one of the at least one application and determine whether information relating to the entered application exists. The processor 210 can determine whether contents of the application to be displayed in the first layer can be sorted based on a category, and determine whether summary information of the application to be displayed in the first layer exists. The processor 210 can identify an area of a region for displaying the first layer and an area of a region for displaying the second layer, and generate the first layer and the second layer beneath it according to the identified areas. The processor 210 can detect that the selected region is scrolled in one of a vertical direction and a horizontal direction, and determine that the region of the first layer is extended or reduced according to the detected scroll direction and distance. The processor 210 can detect that the selected region is scrolled either vertically or horizontally, and determine that the region of the second layer is extended or reduced according to the detected scroll direction and distance. The processor 210 can sort to include at least one contents belonging to a preset category among at least one contents displayed in the first layer. The processor 210 can confirm that only the second layer is displayed after the first layer is scrolled up to a maximum distance either vertically or horizontally, and confirm that an application relating to the selected icon is executed.

The AP 211 can control hardware or software components connected to the AP 211 by driving an operating system or an application program, and carry out data processing and operations including multimedia data. The AP 211 can be implemented using, for example, a System on Chip (SoC). The processor 210 can further include a Graphic Processing Unit (GPU) which is not depicted.

The CP 213 can manage data links and convert the communication protocol in the communication between the electronic device (e.g., the electronic device 100) including the hardware 200 and the other electronic devices connected over the network. The CP 213 can be implemented using, for example, a SoC. The CP 213 can perform at least part of a multimedia control function. The CP 213 can identify and authenticate a terminal in the communication network using the SIM card 214. The CP 213 can provide the user with services including voice call, video call, text message, and packet data.

The CP 213 can control data transmission and reception of the communication module 230. While the components of the CP 213, the power management module 295, and the memory 220 are separated from the AP 211 in FIG. 2, the AP 211 can include part (e.g., the CP 213) of such components.

The AP 211 or the CP 213 can load and process the instruction or the data received from its non-volatile memory or at least one of the other components, in a volatile memory. The 211 AP or the CP 213 can store data received from or generated by at least one of the other components, to the non-volatile memory.

The SIM card 214 can be inserted to a slot formed at a specific location of the electronic device. The SIM card 214 can contain unique identification information (e.g., Integrated Circuit Card Identifier (ICCID)) or subscriber information (e.g., International Mobile Subscriber Identity (IMSI)).

The memory 220 can include an internal memory 222 and an external memory 224. The memory 220 can be, for example, the memory 130 of FIG. 1. The internal memory 222 can include at least one of, for example, the volatile memory (e.g., Dynamic Random Access Memory (DRAM), Static RAM (SRAM), Synchronous DRAM (SDRAM)) and the non-volatile memory (e.g., One-Time Programmable Read Only Memory (OTPROM), Programmable ROM (PROM), Erasable PROM (EPROM), Electrically EPROM (EEPROM), mask ROM, flash ROM, NAND flash memory, NOR flash memory). The internal memory 222 can employ a Solid State Drive (SSD). The external memory 224 can include, for example, a Compact Flash (CF), a Secure Digital (SD), a Micro-SD, a Mini-SD, an extreme digital (xD), and a memory stick.

The communication module 230 can include a wireless communication module 231 and a Radio Frequency (RF) module 234. For example, the communication module 230 can be the communication module 160 of FIG. 1. For example, the wireless communication module 231 can include a Wi-Fi 233, a BT 235, a GPS 237, and an NFC 239. For example, the wireless communication module 231 can provide a wireless communication function using a radio frequency. Additionally, the wireless communication module 231 can include a network interface (e.g., LAN card) or a modem for connecting the hardware 200 to the network (e.g., Internet, LAN, WAN, telecommunication network, cellular network, satellite network, or POTS).

The RF module 234 can control the data transmission and reception, for example, the transmission and reception of the RF signal or the paged electric signal. For example, the RF module 234 can includes a transceiver, a Pulse Amplitude Modulation (PAM), a frequency filter, or a Low Noise Amplifier (LNA) which are not shown. The RF module 234 can further include a component, for example, conductor or conducting wire, for sending and receiving electromagnetic waves in free space during the wireless communication.

The sensor module 240 can include at least one of, for example, a gesture sensor 240A, a gyro sensor 240B, an atmospheric pressure sensor 240C, a magnetic sensor 240D, an acceleration sensor 240E, a grip sensor 240F, a proximity sensor 240G, a Red Green Blue (RGB) sensor 240H, a biometric sensor 240I, a temperature/humidity sensor 240J, a light sensor 240K, and an UltraViolet (UV) sensor 240M. The sensor module 240 can measure a physical quantity or detect the operation status of the electronic device, and convert the measured or detected information to an electric signal. Additionally, the sensor module 240 can include, for example, an E-noise sensor, an electromyography (EMG) sensor, an electroencephalogram (EEG) sensor, an electrocardiogram (ECG) sensor, or a finger print sensor. The sensor module 240 can further include a control circuit for controlling its one or more sensors.

The user input module 250 can include a touch panel 252, a pen sensor 254 capable of detecting a digital pen, a key 256, and an ultrasonic input device 258. For example, the user input module 250 can be the user input module 140 of FIG. 1. The touch panel 252 can recognize the touch input using at least one of capacitive, resistive, infrared, and Surface Acoustic Wave (SAW) techniques. The touch panel 252 can further include a controller (not shown). The capacitive touch panel can recognize not only the direct touch but also the proximity. The touch panel 252 can further include a tactile layer. In this case, the touch panel 252 can provide a tactile response to the user.

The pen sensor 254 can be implemented using, for example, the same or similar method as or to the user's touch input, or using a separate recognition sheet. For example, the key 256 can include a keypad or a touch key. The ultrasonic input device 258, which obtains data by detecting microwave through a microphone 288 in the electronic device, allows radio frequency identification through the pen which generates an ultrasonic signal. The hardware 200 can receive the user input from an external device (e.g., network, computer, server) connected using the communication module 230.

The display module 260 can include a panel 262 or a hologram 264. For example, the display module 260 can be the display module 150 of FIG. 1. The panel 262 can employ, for example, a Liquid Crystal Display (LCD) or an Active Matrix Organic Light Emitting Diode (AMOLED). The panel 262 can be implemented, for example, flexibly, transparently, or wearably. The panel 262 can be constructed as the single module with the touch panel 252. The hologram 264 can present a three-dimensional image in the air using interference of light. The display module 260 can further include a control circuit for controlling the panel 262 or the hologram 264. When the trigger occurs, the display module 260 can display the contents of the entered application in the first layer and concurrently display the entered application information in the second layer. The display module 260 can display the application contents in the generated first layer and concurrently display at least one of the icon for controlling to sort the application contents based on the category and the summary information of the application in the generated second layer. The display module 260 can select the region not including the contents in the first layer region displayed, select the region including the contents in the first layer region displayed, and display the detailed information of the contents in the selected region which is extended from the first layer region to the maximum. The display module 260 can select one of the regions including the application summary information in the second layer region displayed, and display the detailed information of the summary information selected in the second layer while the area of the first layer region is not changed. The display module 260 can select the region excluding the region of the application summary information in the second layer region displayed. The display module 260 can select one of the at least one icon displayed in the second layer, display at least contents sorted in the first layer, and select one of the at least one icon displayed in the second layer.

The interface 270 can include, for example, a High Definition Multimedia Interface (HDMI) 272, a Universal Serial Bus (USB) 274, a projector 276, and a D-subminiature (D-sub) 278. Additionally, the interface 270 can include, for example, a SD/Multi-Media Card (MMC) or Infrared Data Association (IrDA), which are not shown.

The audio codec 280 can convert the voice to an electric signal and vice versa. For example, the audio codec 280 can convert voice information which is input or output through, for example, a speaker 282, a receiver 284, an earphone 286, or the microphone 288.

The camera module 291 can capture a still picture and a moving picture, and can include one or more image sensors (e.g., front lens or rear lens), an Image Signal Processor (ISP), or a flash LED, which are not shown.

The power management module 295 can manage power of the hardware 200. For example, the power management module 295 can include a Power Management IC (PMIC), a charger IC, or a battery fuel gauge.

The PMIC can be mounted in, for example, an IC or a SoC conductor. The charging type can be divided to a wired type and a wireless type. The charger IC can charge the battery and prevent overvoltage or overcurrent from flowing from the charger. The charger IC can include a charger IC for at least one of the wired charging type or the wireless charging type. The wireless charging type includes, for example, magnetic resonance, magnetic induction, and microwave, and can further include an additional circuit, for example, coil loop, resonance circuit, rectifier circuit, for the wireless charging.

For example, the battery fuel gauge can measure the remaining capacity of the battery 296 and the voltage, the current, or the temperature of the charging. The battery 296 can supply the power by generating the electricity. For example, the battery 296 can be a rechargeable battery.

The indicator 297 can display a specific status, for example, booting state, message state, or charging state of the hardware 200 or part (e.g., AP 211) of the hardware 200. The motor 298 can convert the electric signal to a mechanic vibration. An MCU 299 can control the sensor module 240.

Although it is not depicted here, the hardware 200 can further include a processor (e.g., GPU) for supporting mobile TV. For example, the processor for supporting the mobile TV can process media data in conformity with Digital Multimedia Broadcasting (DMB), Digital Video Broadcasting (DVB), or media flow standard.

The names of the hardware components of the present disclosure can differ according to the type of the electronic device. The hardware of the present disclosure can include at least one of the components, omit some components, or further include other components. Some of the hardware components can be united to the single entity to carry out the same functions of the corresponding components.

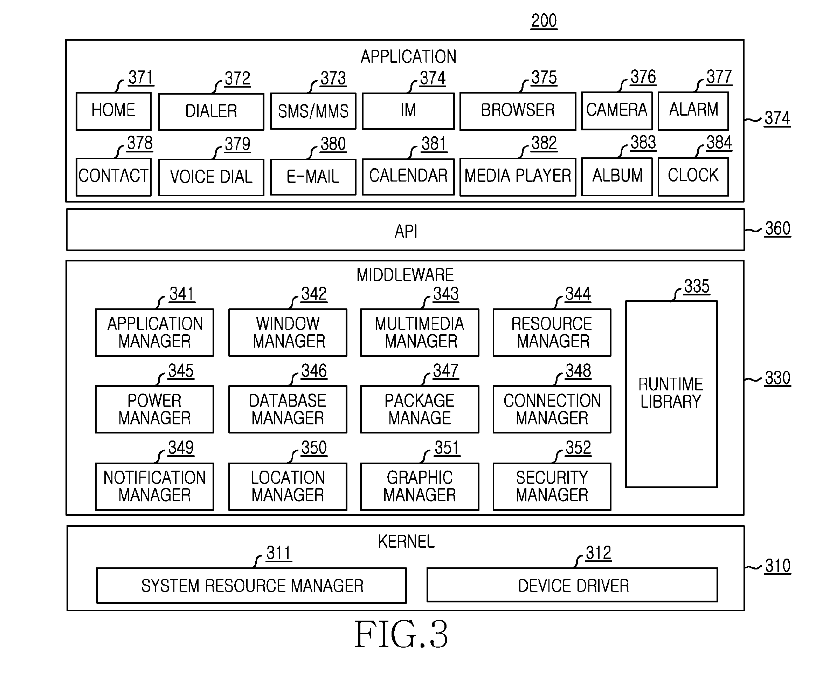

FIG. 3 is a block diagram of the programming module 300 according to an embodiment of the present disclosure. The programming module 300 can be included to the electronic device 100 (e.g., stored in the memory 130) of FIG. 1. At least part of the programming module 300 can be configured using software, firmware, hardware, or a combination of at least two of them. The programming module 300 can include an Operating System (OS) for controlling resources of the electronic device (e.g., the electronic device 100) in the hardware (e.g., the hardware 200), and various applications (e.g., the application 370) driven in the OS. For example, the OS can include Android, iOS, Windows, Symbian, Tizen, and Bada. Referring to FIG. 3, the programming module 300 can include a kernel 310, a middleware 330, an API 360, and an application 370.

The kernel 310 (e.g., the kernel 131) can include a system resource manager 311 and a device driver 312. For example, the system resource manager 311 can include a process manager 313, a memory manager 315, and a file system manager 317. The system resource manager 311 can control, allocate, or withdraw the system resource. The device driver 312 can include, for example, a display driver 314, a camera driver 316, a BT driver 318, a shared memory driver 320, a USB driver 322, a keypad driver 324, a Wi-Fi driver 326, and an audio driver 328. The device driver 312 can include an Inter-Process Communication (IPC) driver (not shown).

The middleware 330 can include a plurality of preset modules for providing the common function required by the application 370. The middleware 330 can allow the application 370 to efficiently use the limited system resources of the electronic device through the API 360. For example, as shown in FIG. 3, the middleware 330 (e.g., the middleware 132) can include at least one of a runtime library 335, an application manager 341, a window manager 342, a multimedia manager 343, a resource manager 344, a power manager 345, a database manager 346, a package manage 347, a connectivity manager 348, a notification manager 349, a location manager 350, a graphic manager 351, and a security manager 352.

The runtime library 335 can include, for example, a library module used by a compiler to add a new function using a programming language while the application 370 is executed. The runtime library 335 can function for input and output, memory management, and arithmetic function.

The application manager 341 can manage, for example, a life cycle of at least one of the application 370. The window manager 342 can manage GUI resources used in the screen. The multimedia manage 343 can identify a format required to play various media files, and encode or decode the media file using a code suitable for the corresponding format. The resource manager 344 can manage a source code, a memory, a storage resource of at least one of the application 370.

The power manager 345 can manage the battery or the power in association with Basic Input/Output System (BIOS), and provide power information for the operation. The database manager 346 can manage to generate, retrieve, or change a database to be used by at least one of the application 370. The packet manager 347 can manage installation or updating of the application distributed as a packet file.

The connectivity manager 348 can manage the wireless connection of the Wi-Fi or the BT. The notification manager 349 can display or notify an event of an incoming message, an appointment, and proximity to the user without interruption. The location manager 350 can manage location information of the electronic device. The graphic manager 351 can manage graphical effect for the user or its related user interface. The security manager 352 can provide a security function for the system security or the user authentication. When the electronic device (e.g., the electronic device 100) has a telephone function, the middleware 330 can further include a telephony manager (not shown) for managing the voice or video call function of the electronic device.

The middleware 330 can generate and use a new middleware module by combining various functions of the internal component modules. The middleware 330 can provide a specialized module per OS so as to provide a differentiated function. The middleware 330 can dynamically eliminate some components or add new components. Hence, the embodiments of the present disclosure can omit some of the components, include other components, or replace with other components of similar functions.

The API 360 (e.g., the API 133), which is a set of API programming functions, can differ according to the OS. For example, in Android and iOS™, one API set can be provided per platform. In Tizen™, two or more API sets can be provided.

The application 370 (e.g., the application 134) can include, for example, a preload application or a third party application.

At least part of the programming module 300 can be implemented using an instruction stored in a computer-readable storage medium. When the one or more processors (e.g., the processor 210) execute the instruction, it/they can perform the function corresponding to the instruction. The computer-readable storage medium can be, for example, the memory 260. At least part of the programming module 300 can be implemented (e.g., executed) by the processors 210. At least part of the programming module 300 can include a module, a program, a routine, a set of instructions, or a process for one or more functions.

The names of the components of the programming module (e.g., the programming module 300) can differ according to the type of the OS. The programming module can include at least one of the components, omit some components, or further include other components.

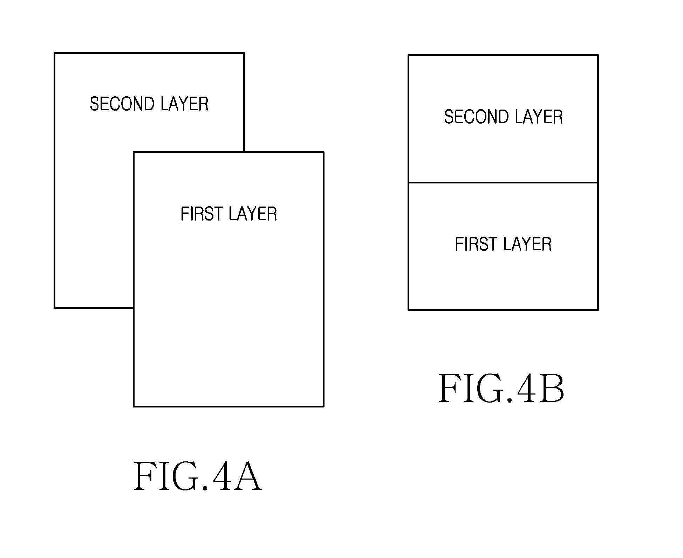

FIGS. 4A and 4B depict the first layer and the second layer according to an embodiment of the present disclosure. Referring first to FIG. 4A, when entering a particular application, the electronic device can determine whether information relating to the entered application exists. More specifically, the electronic device can determine whether the application contents to be displayed in the first layer can be sorted based on the category, and whether summary information of the application to be displayed in the first layer exists.

When determining that the application contents to be displayed in the first layer can be sorted based on the category and that the summary information of the application to be displayed in the first layer exists, the electronic device can concurrently display the application in the first layer and the application information in the second layer.

Herein, the first layer, which is equal to or smaller than the second layer in size, can be placed next above the second layer and contain the stored application contents. That is, the first layer can display main contents of the application. For example, when entering a schedule application, the electronic device can display a calendar of recorded schedules in the first layer.

The second layer, which is equal to or greater than the first layer in size, can be placed next below the first layer and contain at least one of the icon for controlling to sort the application contents to be displayed in the first layer based on the category and the application summary information. That is, the second layer can display the application information. Herein, the electronic device can display the calendar of the recorded schedules in the first layer and the summary information of the recorded schedules in the second layer at the same time.

That is, the electronic device can concurrently display the application contents in the first layer and the application information in the second layer so that the user can view part of the second layer region. Hence, the user can obtain the main contents of the application displayed in the first layer and easily obtain the entered application information in part of the second layer region below the first layer.

As such, while the electronic device includes the second layer right under the first layer to present part of the second layer region to the user, the electronic device can place and display the first layer and the second layer on the single plane.

For example, as shown in FIG. 4B, the electronic device can allocate a certain region of the single plane to the first layer and the other region to the second region. More specifically, upon entering a particular application, the electronic device can display the main contents of the application in part of the single plane and the application information in the other region.

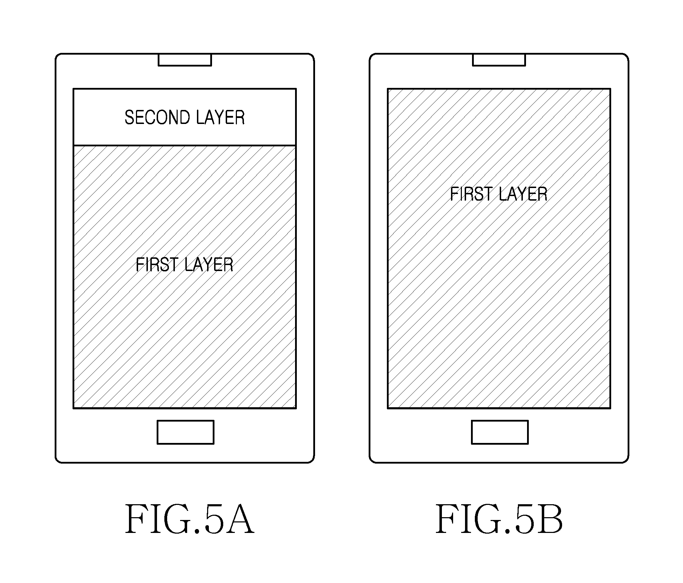

FIG. 5 depicts the layer display differentiated based on the application information stored in the electronic device according to an embodiment of the present disclosure. When entering any one of applications stored in the electronic device, the electronic device can determine whether information relating to the installed application exists. More specifically, the electronic device can determine whether the contents of the application to be displayed in the first layer can be sorted based on the category and whether summary information of the application to be displayed in the first layer exists.

It is assumed that the contents of the application to be displayed in the first layer can be sorted based on the category and that the summary information of the application to be displayed in the first layer exists.

In this case, the electronic device can concurrently display the stored application contents in the first layer and the stored application information in the second layer as shown in FIG. 5A.

For example, the electronic device includes a call application for the telephone call among a plurality of applications stored in the electronic device, and stores, i.e., 50 phone numbers in total in the call application with, i.e., 3 missed calls.

In this case, the electronic device can concurrently display a list of the i.e.,50 phone numbers in the first layer and the icon for re-sorting the list of the 50 phone number in a preset order in the second layer, and also can display summary information of the 3 missed calls.

By contrast, when determining that the contents of the application to be displayed in the first layer cannot be sorted based on the category and that the summary information of the application to be displayed in the first layer does not exist, the electronic device can display only the first layer on its touch screen as shown in FIG. 5B.

When displaying the application information in the second layer and determining that the information is confirmed according to a user's selection, the electronic device can display only the first layer on its touch screen.

When displaying the summary information of the 3 missed calls in the second layer and then selecting the summary information displayed in the second layer, the electronic device can determine that the user confirms the summary information displayed in the second layer and thus display only the first layer on its touch screen.

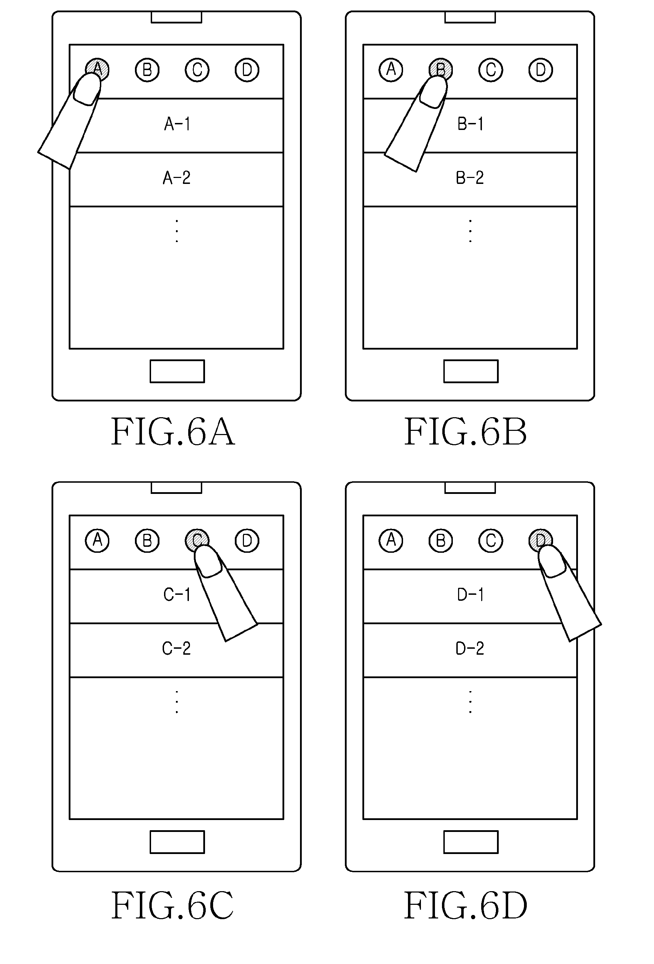

FIGS. 6A to 6D depict the icon selected for controlling to sort the application contents based on the category in the second layer of the electronic device according to an embodiment of the present disclosure. Hereafter, it is assumed that the electronic device enters an e-mail application, determines information relating to the application, and display four icons for controlling the application contents in the second layer. Among the four icons displayed in the second layer, the first icon can display the received e-mails in time order, the second icon can display unread e-mails of the received e-mails, the third icon can display e-mails requiring an urgent reply, and the fourth icon can display the deleted e-mails.

As shown in FIG. 6A, when the first icon A is selected among the icons displayed in the second layer, the electronic device can display the received e-mails based on the reception time. For example, the electronic device can display the received e-mails such as A-1 and A-2 based on the reception time and thus control the contents of the first layer.

As shown in FIG. 6B, when the second icon B is selected among the icons displayed in the second layer, the electronic device can display the unread e-mails of the received e-mails in a preset order. For example, the electronic device can display the unread e-mails such as B-1 and B-2 of the received e-mails on the reception time basis and thus control the contents of the first layer.

As shown in FIG. 6C, when the third icon C is selected among the icons displayed in the second layer, the electronic device can display the e-mails requiring the urgent reply among the received e-mails in a preset order. For example, the electronic device can display the e-mails requiring the urgent reply such as C-1 and C-2 of the received e-mails based on the reception time and thus control the contents of the first layer.

As shown in FIG. 6D, when the fourth icon D is selected among the icons displayed in the second layer, the electronic device can display the deleted e-mails of the sent and received e-mails in a preset order. For example, the electronic device can display the deleted e-mails such as D-1 and D-2 of the sent and received e-mails based on the reception time and thus control the contents of the first layer.

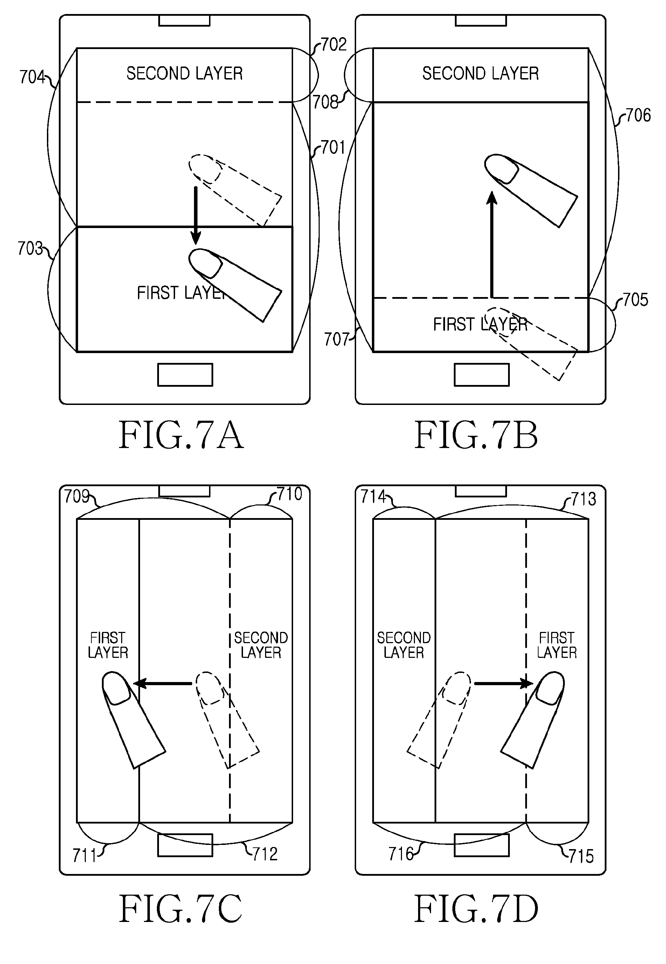

FIGs. 7A to 7D depicts display region change of the first layer and the second layer by scrolling the first layer in the electronic device according to an embodiment of the present disclosure. Upon retrieving the stored application information, the electronic device can display the stored application contents in a first layer 701 and its related information in a second layer 702 at the same time. More specifically, the electronic device can confirm the area of the region for displaying the first layer 701 and the area of the region for displaying the second layer 702, and then generate the first layer 701 and the second layer 702 right beneath the first layer 701 according to the respective areas. Next, the electronic device can concurrently display the application contents in the first layer 701 and at least one of the icon for controlling to sort the application contents based on the category and the application summary information in the second layer 702.

When selecting a certain region of the first layer 701 and detecting the downward scrolling, the electronic device reduces the first layer region 703 according to the detected scroll direction and distance as shown in FIG. 7A. That is, in view of the user, to see the application information displayed in the second layer 702, the user can look closely at the application information displayed in a second layer 704 by scrolling the first layer 701 downwards.

Likewise, when selecting a certain region of a first layer 705 and detecting the upward scrolling, the electronic device expands a first layer region 707 according to the detected scroll direction and distance as shown in FIG. 7B. That is, in view of the user, to check the application contents displayed in a first layer 705, the user can look closely at the application contents displayed in a first layer 707 by scrolling the first layer 705 upwards. That is, the electronic device reduces a second layer region 708 according to the scrolled location of an initial second layer region 706.

Likewise, when selecting a certain region of a first layer 709 and detecting the scrolling to the right, the electronic device reduces a first layer region 711 according to the detected scroll direction and distance as shown in FIG. 7C. That is, in view of the user, to check the application information displayed in a second layer 710, the user can look closely at the application information displayed in a second layer 712 by scrolling a first layer 709 to the right.

Likewise, when selecting a certain region of a first layer 713 and detecting the scrolling to the left, the electronic device reduces a first layer region 715 according to the detected scroll direction and distance as shown in FIG. 7D. That is, in view of the user, to check the application contents displayed in a first layer 713, the user can look closely at the application contents displayed in a first layer 715 by scrolling the first layer 713 to the left. That is, the electronic device can expand a second layer region 716 according to the scrolled location of an initial second layer region 714.

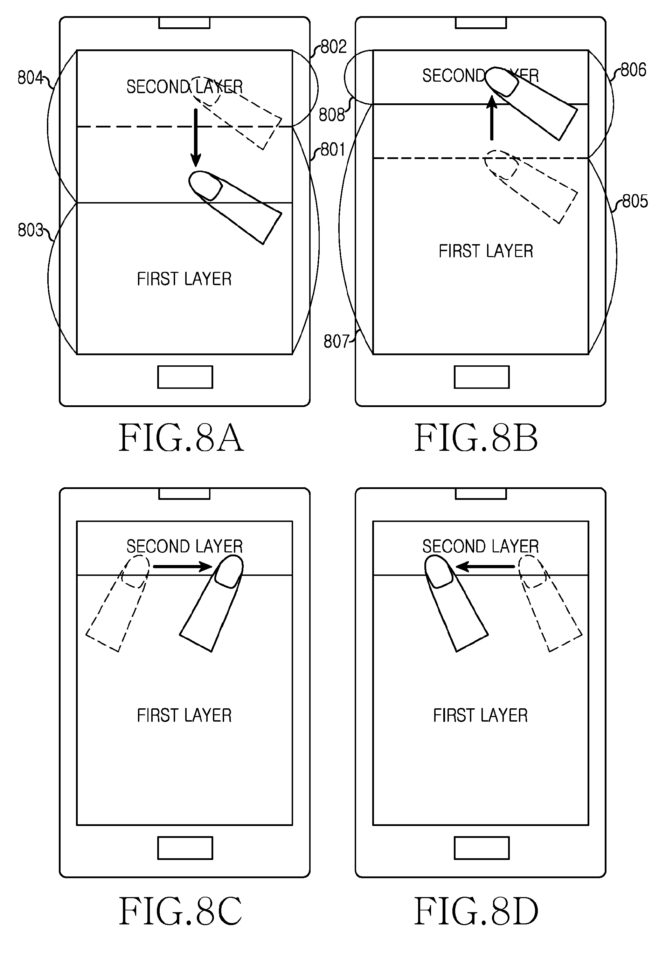

FIGs. 8A to 8D depict display region change of the first layer and the second layer by scrolling the second layer in the electronic device according to an embodiment of the present disclosure. Upon retrieving the stored application information, the electronic device can concurrently display the stored application contents in a first layer 801 and its related information in a second layer 802.

More specifically, the electronic device can confirm the area of the region for displaying the first layer 801 and the area of the region for displaying the second layer 802, and then generate the first layer 801 and the second layer 802 right beneath the first layer 801 according to the respective areas. Next, the electronic device can concurrently display the application contents in the first layer 801 and at least one of the icon for controlling to sort the application contents based on the category and the application summary information in the second layer 802.

When selecting a certain region of the second layer 802 and detecting the downward scrolling, the electronic device expands a second layer region 804 according to the detected scroll direction and distance as shown in FIG. 8A. That is, in view of the user, to check the application information displayed in the second layer 802, the user can look closely at the application information displayed in a second layer 804 by scrolling the second layer 802 downwards. That is, the electronic device reduces a first layer region 803 according to the scrolled location of the initial first layer region 801.

Likewise, when selecting a certain region of a second layer 806 and detecting the upward scrolling, the electronic device reduces a second layer region 808 according to the detected scroll direction and distance as shown in FIG. 8B. That is, in view of the user, to check the application contents displayed in a first layer 805, the user can look closely at the application contents displayed in a first layer 807 by scrolling the second layer 806 upwards.

When selecting a certain region of the second layer and detecting the left or right scrolling, the electronic device can display the related information not displayed currently in the second layer as shown in FIGS. 8C and 8D.

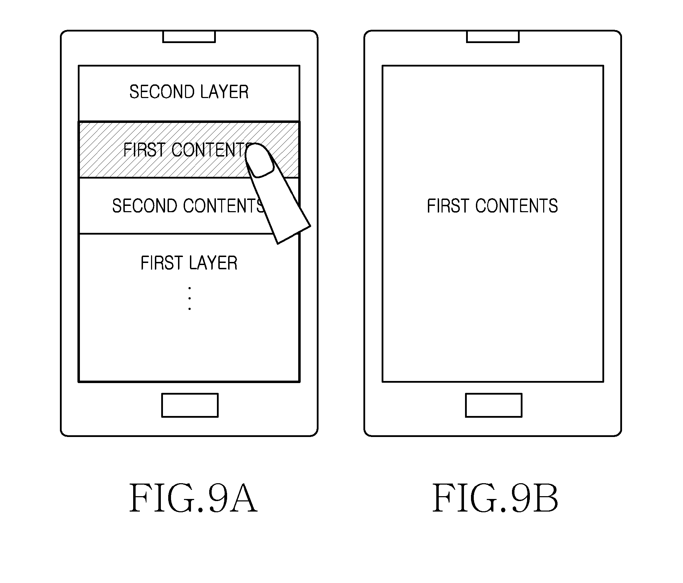

FIGS. 9A and 9B depict content execution displayed in the first layer of the electronic device according to an embodiment of the present disclosure. When determining the information related to the application, the electronic device can display the application contents in the first layer and the application information in the second layer.

Next, the electronic device can select a certain region of the first layer including the application contents. More specifically, the electronic device can select one of the contents displayed in the first layer. For example, the electronic device can select the first contents of the contents displayed in the first layer as shown in FIG. 9A.

To execute the selected contents, the electronic device can display the selected contents on the touch screen by magnifying the first layer region to the maximum. More specifically, the electronic device can display the selected contents on the touch screen by magnifying the first layer region to the maximum such that the second layer is hidden by the first layer.

For example, when the selected contents is video contents, to execute the selected video contents, the electronic device can expand the first layer region to the maximum and display the selected video contents with the second layer hidden by the first layer as shown in FIG. 9B.

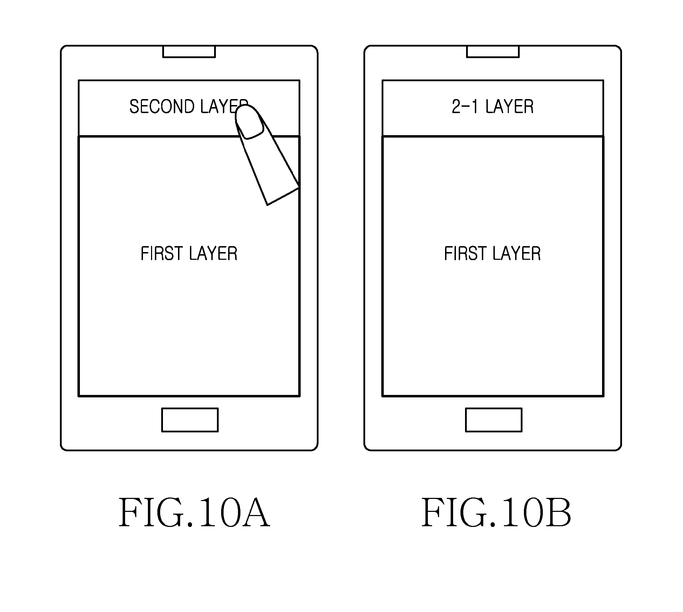

FIGs. 10A and 10B depict the detailed display of the application information displayed in the second layer of the electronic device according to an embodiment of the present disclosure. When determining the information related to the application, the electronic device can display the application contents in the first layer and the application information in the second layer.

Next, the electronic device can select the application information displayed in the second layer as shown in FIG. 10A. For example, when entering the call application, the electronic device can display the summary information of the missed call from A in the second layer and then select information relating to A.

Next, the electronic device can display detailed information of the selected information in the second layer as shown in FIG. 10B. More specifically, the electronic device can display the selected detailed information in the second layer without altering the first and second layer regions.

The electronic device can display the detailed information of the selected A in the second layer. In more detail, the electronic device can display the missed call time from A and the contact of A in the second layer without altering the first and second layer regions.

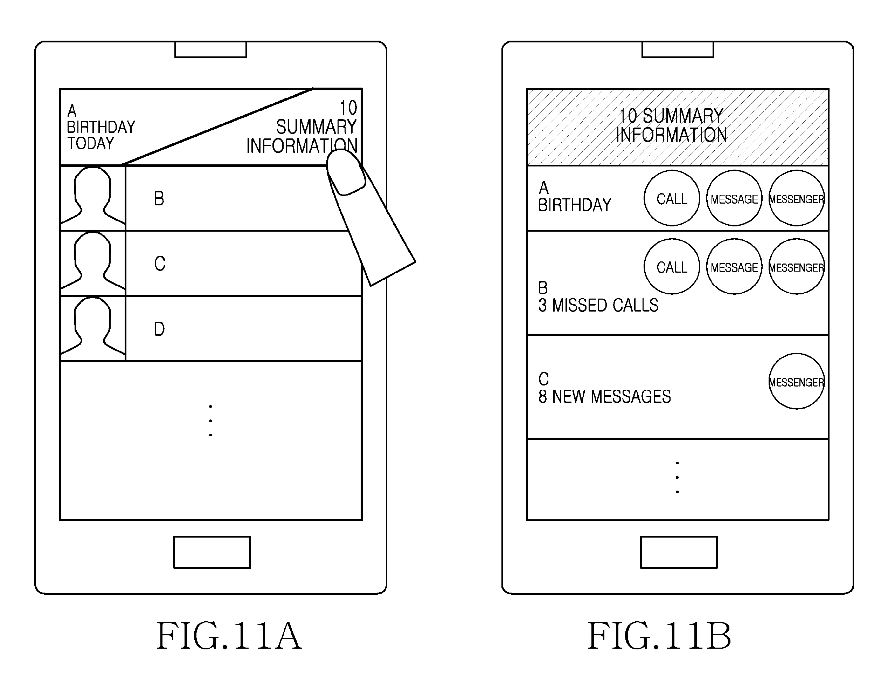

FIGs. 11A and 11B depict one link of the application to another application in the electronic device according to an embodiment of the present disclosure. Hereafter, the electronic device enters the call application and determines the summary information of the entered application.

The electronic device can concurrently display the stored contact list of a preset order in the first layer and the application information in the second layer. For example, the electronic device can concurrently display the list of the preset order in the first layer and 10 summary information including information "A's birthday today" in the second layer.

When receiving the user's input for magnifying the information of the second layer on the touch screen of the electronic device, the electronic device can magnify the information displayed in the second layer on the touch screen. For example, when selecting a certain region of the first layer and detecting the downward scrolling to the bottom, the electronic device can display only the summary information of the second layer on the touch screen.

Next, the electronic device can display only the summary information of the second layer on the touch screen. For example, the electronic device can display the summary information "A's birthday today" together with a call icon for making a call to A, a message icon for sending a message to A, and a messenger icon for sending a message such as SNS to A as shown in FIG. 11B. The electronic device can display the summary information "3 missed calls from B" together with the call icon for making a call to B, the message icon for sending a message to B, and the messenger icon for sending the message such as SNS to B. The electronic device can display the summary information "C new 9 messages" together with the messenger icon for sending the message such as SNS to C.

When one of the icons displayed with the summary information is selected, the electronic device can immediately link to the selected application. For example, when the call icon displayed with the summary information "A's birthday today" is selected, the electronic device can immediately send the call to A. Likewise, when the message icon is selected, the electronic device can link to the message application for writing a message to A. Likewise, when the messenger icon is selected, the electronic device can link to the messenger application for sending the message to A.

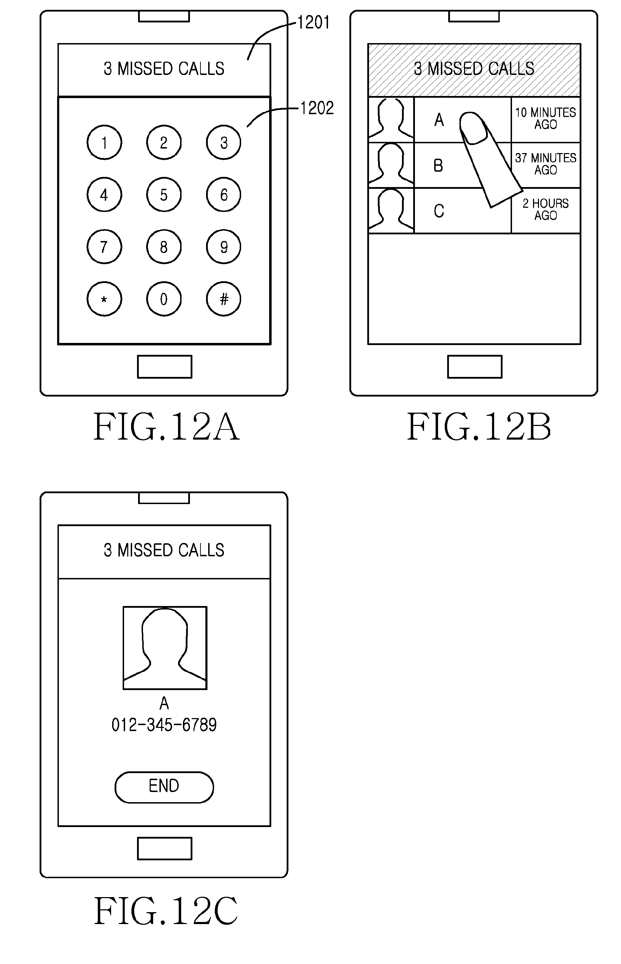

FIGS. 12A to 12C depict another link of the application to another application in the electronic device according to an embodiment of the present disclosure. Hereafter, the electronic device enters the call application and determines the summary information of the application.

The electronic device can concurrently display digits for making a call to a certain electronic device in a first layer 1202 and application information in a second layer 1201. For example, the electronic device can concurrently display the digits from 0 to 9 in the first layer 1202 and information "3 missed calls" in the second layer 1201 as shown in FIG. 12A.

When receiving the user's input for magnifying the information of the second layer 1201 on the touch screen of the electronic device, the electronic device can magnify the information displayed in the second layer 1201 on the touch screen. For example, when selecting a certain region of the first layer 1202 and detecting the downward scrolling to the bottom, the electronic device can display only the summary information of the second layer 1201 on the touch screen.

Next, the electronic device can display only the summary information of the second layer 1201 on the touch screen. For example, the electronic device can display the summary information such as "missed call from A 10 minutes ago", "missed call from B 37 minutes ago", and "missed call from C 2 hours ago" as shown in FIG. 12B.

When one of the summary information displayed on the touch screen is selected, the electronic device can immediately link to the application relating to the selected information. For example, when the information relating to "A" is selected in the summary information displayed on the touch screen as shown in FIGS. 12B and 12C, the electronic device can immediately send the call to A. That is, the user has only to select the displayed summary information to immediately send the call to the selected user without having to leave the application and re-enter the call icon.

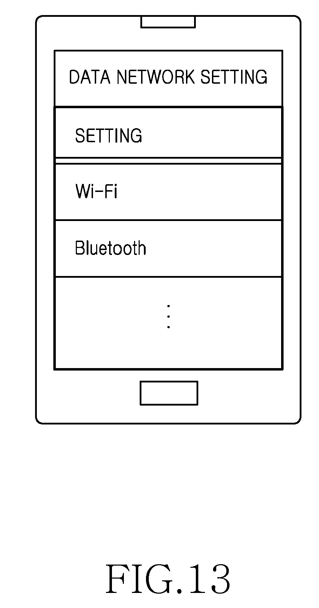

FIG. 13 depicts recommendation of the second layer information by determining a current condition of the electronic device in the electronic device according to an embodiment of the present disclosure. The electronic device can determine its current condition and display the entered application information in the first layer.

For example, as shown in FIG. 13, when entering a setting menu for setting a data network, the electronic device can display detailed data network information in order of the data networks frequently used by the user, in the first layer.

For example, when determining the battery below a preset capacity and entering a battery application, the electronic device can display a setting menu for adjusting screen brightness in the first layer.

For example, when entering the setting menu, the electronic device can display detailed menu information in a menu order frequently used by the user in the first layer.

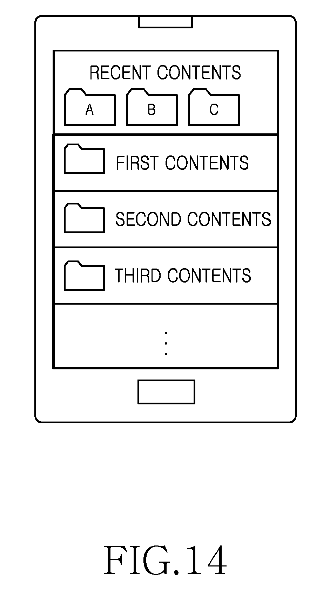

FIG. 14 depicts information most likely to be executed in the second layer of the electronic device according to an embodiment of the present disclosure. The electronic device can display the application information in the second layer, and display information most likely to be executed by the user, in the second layer according to characteristics of the application.

For example, as shown in FIG. 14, when entering a menu for checking the content list, the electronic device can display a total list stored in the first layer and contents recently played in the second layer at the same time. That is, the electronic device can concurrently display the stored content list such as "first contents to third contents" in the first layer and the recent content information such as "contents A to contents C" in the second layer.

Although it is not depicted in FIG. 14, the electronic device can display recently downloaded content information and recently edited content information in the second layer.

The electronic device can detect the horizontal or vertical scrolling in a selected region of the second layer and display the information of the second layer according to the scroll direction and distance.

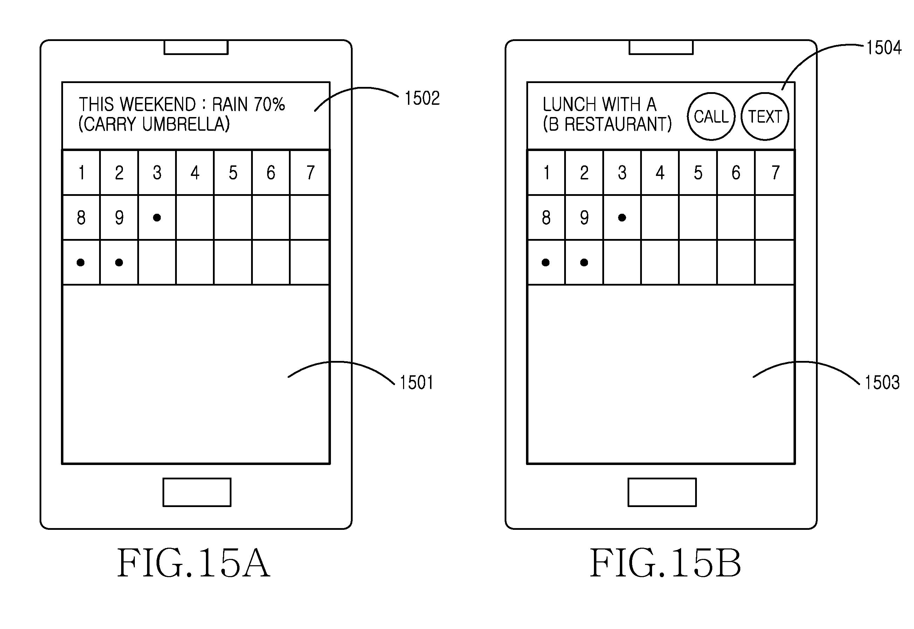

FIGs. 15A and 15B depict yet another link of the application to another application in the electronic device according to an embodiment of the present disclosure. When entering a particular application, the electronic device can determine whether the application information exists as shown in FIG. 15A. Next, when determining that the contents of the application to be displayed in a first layer 1501 can be sorted based on the category and determining the summary information of the application to be displayed in the first layer 1501 exists, the electronic device can concurrently display the application contents in the first layer 1501 and the application information in a second layer 1502.

For example, when entering the schedule application, the electronic device can concurrently display the calendar recording the user's schedules in the first layer 1501 and the summary information "this weekend : rain 70%" in the second layer 1502 as shown in FIG. 15A.

For example, the electronic device can concurrently display the calendar recording the user's schedules in a first layer 1503 and the summary information "lunch with A today" in a second layer 1504 as shown in FIG. 15B. The electronic device can display the call icon for sending the call to A and the message icon for writing a text message to A in the second layer 1504 so as to link to the selected application according to the user's selection.

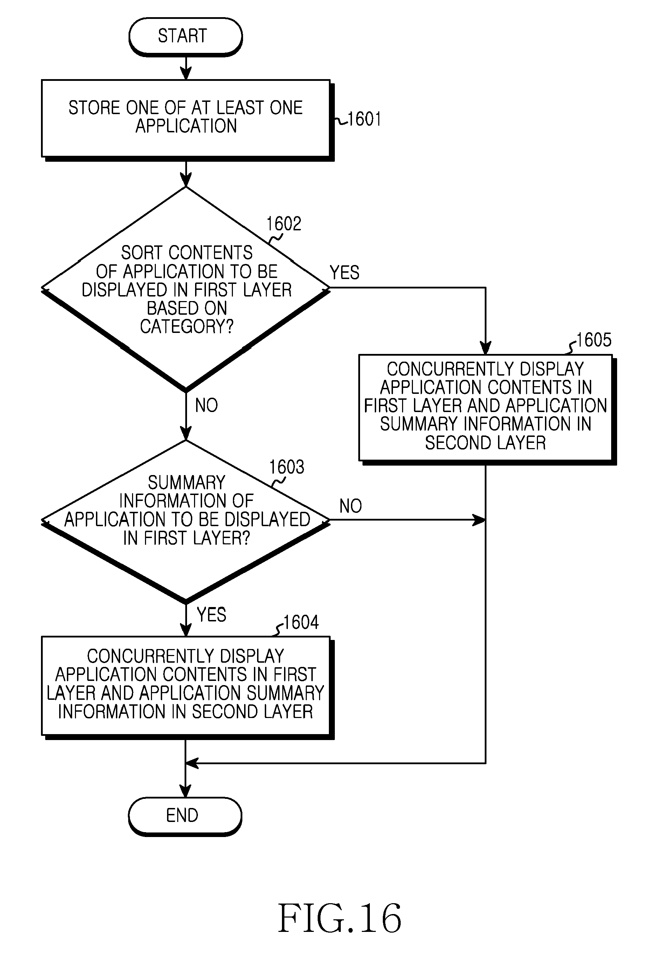

FIG. 16 is a flowchart of a method for displaying the application information in the electronic device according to an embodiment of the present disclosure. As shown in FIG. 16, the electronic device can enter one of at least one application in step 1601. More specifically, the electronic device can execute and enter one of the applications stored therein.

In step 1602, the electronic device can determine whether the contents of the application to be displayed in the first layer can be sorted based on the category. For example, when entering the e-mail application, the electronic device can determine whether to sort the application contents to be displayed in the first layer, for example, to sort the received e-mails to the e-mails in time order, the unread e-mails of the received e-mails, the e-mails requiring the urgent reply, and the deleted e-mails.

When the contents of the application to be displayed in the first layer cannot be sorted based on the category in step 1602, the electronic device can determine whether summary information of the application to be displayed in the first layer exists in step 1603. For example, when entering the call application for making a phone call, the electronic device can determine whether the summary information of the missed call exists in relation to the call application.

When determining the summary information of the application to be displayed in the first layer in step 1603, the electronic device can concurrently display the application contents in the first layer and the application summary information in the second layer in step 1604. For example, when entering the schedule application, the electronic device can concurrently display the calendar recording the user's schedules in the first layer and the summary information "this weekend : rain 70%" in the second layer.

When the contents of the application to be displayed in the first layer can be sorted based on the category in step 1602, the electronic device can concurrently display the application contents in the first layer and the application summary information in the second layer in step 1605. For example, when entering the e-mail application, the electronic device can concurrently display the e-mail application in the first layer and the icons for the received e-mails in time order, the unread e-mails of the received e-mails, the e-mails requiring the urgent reply, and the deleted e-mails in the second layer.

When determining no summary information of the application to be displayed in the first layer in step 1603, the electronic device can finish this process.

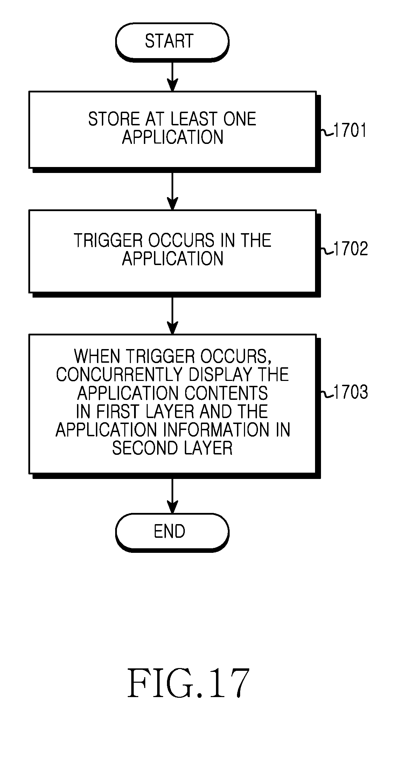

FIG. 17 is a flowchart of a method for displaying the application information in the electronic device according to an embodiment of the present disclosure. As shown in FIG. 17, the electronic device can enter one of at least one application in step 1701. More specifically, the electronic device can execute and enter one of the applications stored therein.

In step 1702, the electronic device can determine whether the trigger occurs in the application. More specifically, the electronic device can determine whether the touch is input from the user in the current application, and determine whether a preset event occurs. For example, after entering a particular application, the electronic device determines no summary information of the first application in the second layer. In this case, when the first layer above the second layer is scrolled in the preset direction, the electronic device can display the detailed data network information in the second layer in the data network order frequently used by the user in the first layer below the second layer.

In step 1703, when the trigger occurs, the electronic device can concurrently display the application contents in the first layer and the application information in the second layer. Thus, the user can see the main contents of the application displayed in the first layer and easily obtain the application information in part of the second layer below the first layer.

It will be appreciated that embodiments of the present disclosure according to the claims and description in the specification can be realized in the form of hardware, software or a combination of hardware and software. Any such software can be stored in a non-transient computer readable storage medium. The non-transient computer readable storage medium stores one or more programs (software modules), the one or more programs comprising instructions, which when executed by one or more processors in an electronic device, cause the electronic device to perform a method of the present disclosure. Any such software can be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present disclosure. Accordingly, embodiments provide a program comprising code for implementing apparatus or a method as claimed in any one of the claims of this specification and a machine-readable storage storing such a program. Still further, such programs can be conveyed electronically via any medium such as a communication signal carried over a wired or wireless connection and embodiments suitably encompass the same.

While the disclosure has been shown and described with reference to certain embodiments thereof, it will be understood by those skilled in the art that various changes in form and details may be made therein without departing from the scope of the disclosure as defined by the appended claims and their equivalents.

## Claims

1. A method in an electronic device, comprising:
displaying contents of application in a first layer;
determining whether a trigger occurs in the first layer; and
when the trigger occurs, concurrently displaying the contents of the application in the first layer and information of the applications in a second layer.

2. The method of claim 1, wherein the trigger comprises a touch input.

3. The method of claims 1-2, wherein the contents of application to be displayed in the first layer are sorted based on categories.

4. The method of claims 1-3, wherein summary information of the application is displayed in the first layer.

5. The method of claims 1-4, wherein the first layer is equal to or smaller than the second layer in size, is placed adjacent to the second layer, and contains the contents of application.

6. The method of claims 1-5, wherein the second layer is equal to or greater than the first layer in size, is placed next below the first layer, and contains icons linked to the contents displayed in the first layer sorted based on the categories and summary information of the application.

7. The method of claims 1-6, wherein concurrently displaying of the contents of the application in the first layer and the application information in the second layer comprises:
dividing a screen into a first area for displaying the first layer and a second area for displaying the second layer;
displaying the first layer in the first area and the second layer in the second area; and
concurrently displaying either the contents or icons linked to the contents in the first layer based on categories and summary information of the application in the second layer.

8. The method of claims 1-7, further comprising:
detecting a vertical or horizontal scrolling in the first layer; and
expanding or reducing the first layer according to a direction and a distance of the detected scroll.

9. The method of claims 1-8, further comprising:
receiving a selection of one of the contents in the first layer;
expanding the first layer region to a maximum size; and
displaying detailed information of the selected content.

10. The method of claims 1-9, further comprising:
receiving a selection of one of summary information displayed in the second layer; and
displaying detailed information of an application corresponding to the selected summary information in the second layer.

11. The method of claims 1-10, further comprising:
detecting vertical or horizontal scrolling in the second layer; and
expanding or reducing the second layer according to a direction and a distance of the detected scroll.

12. The method of claims 1-11, further comprising:
receiving a selection of one of at least one icon displayed in the second layer;
sorting at least one contents displayed in the first layer only into at least one contents of a preset category; and
displaying the sorted at least one contents in the first layer.

13. The method of claims 1-12, further comprising:
displaying only the second layer by scrolling the first layer vertically or horizontally to a maximum size;
selecting one of at least one icon displayed in the second layer; and
executing an application relating to the selected icon.

14. A computer program product comprising computer program code means adapted to perform all the steps of any one of the method claims 1 to 13 when the computer program is run on a computer.
